# EUROPEAN PATENT APPLICATION

(11) **EP 3 236 236 A1**
(43) Date of publication of application: **25.10.2017**
(21) Application number: 16000922.1
(22) Date of filing: 22.04.2016
(51) Int. Cl.: G01N 21/03, G01J 3/02, G01N 21/31

(54) **RADIATION SENSOR AND MANUFACTURING METHOD FOR A RADIATION SENSOR**

(71) Applicant: Baden-Württemberg Stiftung gGmbH, 70174 Stuttgart (DE)
(72) Inventor: Negel, Jan-Philipp, 70599 Stuttgart (DE); Marwan, Abdou Ahmed, 70569 Stuttgart (DE)
(74) Representative: Müller-Boré & Partner Patentanwälte PartG mbB

(57) **Abstract**

The present invention relates to a radiation sensor. The radiation sensor comprises: a sensor element having a sensor cavity and a first and second opening; a first optical fibre configured to close the first opening; a connector attached to the sensor element and associated to the second opening; and a second optical fibre attached to the connector, wherein the connector and the second optical fibre are configured to form a channel so that the sensor cavity is in fluid communication with the outer periphery of the sensor element.

## Description

The subject-matter of the present application relates to a radiation sensor, and more particular, to a portable radiation sensor and a corresponding manufacturing method of said radiation sensor.

A general approach for measuring and detecting microwave radiation, e.g. electromagnetic waves in the range of 300MHz to 300GHz, is the use of optoelectronic electromagnetic field sensors or spectroscopy based microwave field sensors. However, optoelectronic electromagnetic field sensors are bulky and invasive, i.e. the size and arrangement of optoelectronic electromagnetic field sensors affects the electromagnetic field which is measured. Furthermore, optoelectronic electromagnetic field sensors have a reduced sensitivity as compared to spectroscopy based microwave field sensors.

In turn, spectroscopy based microwave field sensors are usually used in vacuum chambers to evacuate a sensing element, i.e. a capillary, before the capillary is filled with a reagent like a caesium based fluid. Hence, spectroscopy based microwave field sensors are usually bulky and not portable. Thus, it is not possible to measure local electromagnetic fields.

Therefore, it is an object of the invention to provide an improved radiation sensor which is small in size, portable and which provides an improved sensitivity.

The above objects are solved by a radiation sensor and a method for manufacturing a radiation sensor as defined in the independent claims. Preferred embodiments are defined in the dependent claims.

According to an aspect of the invention, a radiation sensor comprises:
- a sensor element having a sensor cavity and a first and second opening;
- a first optical fibre configured to close the first opening;
- a connector attached to the sensor element and associated to the second opening; and
- a second optical fibre attached to the connector, wherein the connector and the second optical fibre are configured to form a channel so that the sensor cavity is in fluid communication with the outer periphery of the sensor element.

The radiation sensor of the present invention comprises a sensor element which comprises two openings, i.e. a first opening and a second opening. The first and second opening may be connected by a wall which may have a capillary-like or tubular shape. Thus, the sensor element may have a capillary-like, or cylindrical or tubular shape. However, the shape of the wall is not limited to capillary-like or tubular shapes. The space located between the first and second opening and the inner of the wall defines the sensor cavity. The wall may be made of glass, e.g. fused silica, resin, etc.

Furthermore, the first optical fibre is configured to close the first opening. The first optical fibre may have a first and second end. The first end may receive light from a light source, e.g. a laser, and the first optical fibre may guide the light to the second end. The second end of the first optical fibre closes the first opening so that light which is guided through the first optical fibre and which exits the optical fibre at the second end is fed into the sensor element, in particular into the sensor cavity. Furthermore, the second end of the first optical fibre may close the first opening so that a fluid inside the sensor cavity cannot leak out of the sensor cavity at the first opening. In other words, by closing the first opening with second end of the first optical fibre the first opening may be sealed. The sealing may be fluid tight. For this purpose, the first optical fibre may be attached to the wall of the sensor element which may be achieved by providing an optical fibre which has substantially the shape of the sensor element, i.e. a capillary-like or tubular shape. The outer diameter of the first optical fibre may be larger than the diameter of the first opening so that the first optical fibre may be attached to the wall surrounding the first opening. For example without limiting the present subject-matter, the first optical fibre may have an outer diameter of 125µm, the first opening an inner diameter of 56µm, and the wall may have a thickness of 68 µm. That is, the cross-section at the second end of the first optical fibre is larger as the cross-section described by the first opening of the sensor element, so that the cross-section at the second end of the first optical fibre may completely cover the first opening and may provide a sufficiently large area to attach the first optical fibre to the sensor element, i.e. the wall.

However, the elements of the radiation sensor may also have other dimensions. For example, the dimension may be selected based on light guidance and the preferred compactness of the radiation sensor, i.e. the special resolution of the radiation measurement. Thus, the preferred inner diameter of the sensor element may be in the range of 50µm-300µm. Accordingly, the outer diameter of the sensor element may be in the range of 200µm-1mm as well as the dimensions of the connector and first and second optical fibre.

Alternatively, a part of the first optical fibre, specifically an end section of the first optical fibre may be inserted into the sensor element. In particular, the first optical fibre may be partially arranged inside the sensor cavity so that the first optical fibre closes the first opening in a fluid tight manner.

The first optical fibre may be attached to the sensor element by splicing. However, attaching of the first optical fibre is not limited to splicing. The first optical fibre may also be adhered to the sensor element.

Alternatively, a coupling element may be used to attach the first optical fibre to the sensor element. The coupling element may also have a tubular shape and may comprise two holding portions. A first holding portion may define a first part of the coupling element and the second holding portion may define a second part of the coupling element, wherein the first holding portion may have a different inner diameter as the second holding portion. The inner diameter of the first and second holding portion may be configured to fit the outer diameters of the first optical fibre and the sensor element, respectively. In order to attach the first optical fibre to the sensor element, the first optical fibre may be arranged inside the first holding portion and the sensor element may be arranged in the second holding portion so that the end of the first optical fibre faces the first opening of the sensor element. In this way, the first optical fibre closes the first opening and the coupling element couples the first optical fibre and the sensor element.

Furthermore, the sensor element comprises a connector attached to the sensor element and associated to the second opening. The connector is configured to couple the second optical fibre to the sensor element. For example, the connector may also have a capillary-like or a tubular shape. That is, the connector may also comprise two openings connected with a capillary-like or tubular shaped wall.

Furthermore, one side of the connector, i.e. the side of one opening of the connector may be attached to the sensor element, in particular to the side of the sensor element having the second opening.

For example, the wall of the connector surrounding the opening of the connector may be attached to the wall of the sensor element surrounding the second opening of the sensor element, wherein the walls of the connector and the sensor element face each other. However, the invention is not limited to this particular embodiment. For example, a part of the connector may have an inner diameter which is larger as the outer diameter of the sensor element and a portion of the sensor element may be inserted into this part of the connector. That is, a part of the connector encases the portion of the sensor.

Similar to the attaching of the first optical fibre to the sensor element, the connector may be attached to the sensor element by splicing or by adhering the connector to the sensor element.

Furthermore, the second optical fibre is attached to the connector, wherein the connector and the second optical fibre form a channel so that the sensor cavity is in fluid communication with the outer periphery of the sensor element. The outer periphery of the sensor element may be the area which surrounds the sensor element

In particular, the second optical fibre may be attached to the connector so that an end of the second optical fibre faces the second opening. However, the second optical fibre does not close the second opening of the sensor element. Thus, the sensor cavity is in fluid communication with the outer periphery through the second opening and the channel formed by the connector and the second optical fibre. Being in fluid communication means that a fluid, i.e. a gas or a liquid can traverse from the sensor cavity to the outer periphery of the sensor element and vice versa.

With this configuration light which is fed into the sensor element by the first optical element and which propagates through the sensor element may be fed into the second optical fibre since an end of the second optical fibre faces the second opening of the sensor element.

Preferably, the radiation sensor comprises a shell which is associated to the sensor element, wherein the shell comprises a shell cavity and the shell is configured to seal the sensor cavity form the outer periphery of the shell, and wherein the sensor cavity and the shell cavity are in fluid communication via the channel.

That is, the sensor element may be arranged partially or fully inside the shell, i.e. in the shell cavity, wherein the channel, formed by the connector and the second optical fibre, connects the sensor cavity and the shell cavity. Consequently, the sensor cavity and the shell cavity are in fluid communication via the channel.

Preferably, the shell further comprises a first connection portion and a second connection portion. The second connection portion may encase a segment of the second optical fibre and the first connection portion may encase a segment of the first optical fibre. The segment of the second optical fibre may be the perimeter of the cross-section of the second optical fibre perpendicular to the length of the second optical fibre. In other words, the second connection portion may encase the perimeter of the second optical fibre perpendicular to the length of the second optical fibre.

That is, the second optical fibre may traverse the shell through the second connection portion from the shell cavity to the outer periphery of the shell cavity. Encasing the second optical fibre in such a way provides a fluidly sealed passage for the second optical fibre so that a fluid cannot traverse to said passage.

Preferably, the second optical fibre may comprise a coating. However, the segment of the second optical fibre encased by the second connection portion may or may not comprise the coating.

Similar to the segment of the second optical fibre, the segment of the first optical fibre may be encased by the first connection portion. That is, the above description with respect to the encasing of the segment of the second optical fibre applies also to the segment of the first optical fibre.

Due to the encasing of the first and second optical fibre the shell cavity is sealed from the outer periphery of the shell. Since the sensor element may be arranged in the shell cavity the sensor cavity is also sealed against the outer periphery of the shell. Furthermore, the sensor cavity and shell cavity are in fluid communication via the channel.

Preferably, the shell may comprise a port. The port may be used to evacuate the shell cavity and/or to insert a reagent into the shell cavity. However, the disclosure is not limited to such an embodiment. For example, the shell may comprise two ports, one for evacuating the shell and another for inserting the reagent into the shell cavity.

That is, the shell cavity may provide a reservoir for the reagent. Due to diffusion and the channel formed by the second optical fibre and the connector which fluidly couples the shell cavity and the sensor cavity, the reagent is distributing to the sensor cavity.

Alternatively, the first connection portion may encase a segment of the sensor element instead of the segment of the first optical fibre. The segment of the sensor element may be the perimeter of the cross-section of the sensor-element perpendicular to the longitudinal direction of the wall, i.e. the direction of the wall extending from the first opening of the sensor element to the second opening of the sensor element. That is, the segment of the sensor element encased by the first connection portion may provide a sealed connection between the sensor element and the shell cavity. Since the first connection portion encases the sensor element, the size of the shell may be further reduced which consequently leads to a reduced size of the radiation sensor.

Alternatively, the first connection portion may encase a segment of the connector. The segment of the connector may be the perimeter of the cross-section of the connector perpendicular to the longitudinal direction of the connector, i.e. the direction of the connector extending away from the sensor element. This embodiment is advantageous as the sensor element is not arranged within the shell cavity. In other words, the shell is only provided between the connector and the second optical fibre. Since the sensor element is nor surrounded by the shell, it is possible to place the sensor element very close to the location which shall be measured. Hence, electromagnetic fields can be measured very precisely, i.e. very local.

As described above, the connector may have a tubular shape. Hence, the second optical fibre may be arranged inside the connector along the wall so that the end of the second optical fibre facing the sensor element may be spaced apart from the second opening of the sensor element. In other words, the distance between the second opening and the end of the second optical fibre may be determined by arranging the end of the second optical fibre closer or further away from the second opening of the sensor element.

Furthermore, the sensor element, the connector(s) and the shell may be made of glass, e.g. fused silica, resin, etc. However, all kind of glass materials may be possible if a caesium and/or rubidium based reagent is used. However, in the case of some fluids, also metals and/or plastics may be used.

Preferably, the connector may have an inner diameter which is larger than the outer diameter of the second optical fibre and the outer diameter of the second optical fibre is larger than the diameter of the second opening. Due to the differing diameters the inner of the connector defines a cross sectional area which is larger than the cross sectional area of the second optical fibre. Since the second optical fibre is attached in the inner of the connector, i.e. inside the connector along the wall of the connector, the difference of the cross sectional areas of the connector and the second optical fibre defines the channel, in particular the cross-section of the channel. For example without limiting the disclosure, the inner diameter of the connector may be 141µm, which results in a cross sectional area of approximately 15615µm². The outer diameter of the second optical fibre may be 125µm resulting in a cross sectional area of approximately 12272µm². Thus, the cross sectional of the channel may be approximately 3343µm².

General speaking, the larger the cross section of the channel the better the reagent may be distributed to the sensor cavity. However, providing a channel with a larger cross section may lead to an increased decentering of the second optical fibre. Thus, it may be preferable to provide a connector having an inner diameter of 200 µm resulting in a cross section of the connector of 31415 µm² and a second optical fibre having an outer diameter of 150 µm resulting in a cross section of the second optical fibre of 17671 µm². Thus, the cross section of the channel may be 13744 µm². The preferred limit may depend on the cross section of the sensor element.

Preferably, the outer diameter of the second optical fibre may be greater than or equal to the diameter of the second opening. Thus, the cross section of the second optical fibre may cover the cross-section of the second opening when seen from a plan view of the cross-section of the second optical fibre. In this embodiment, the end of the second optical fibre is spaced apart from the second opening. For example without limiting the subject-matter, the distance between the end of the second optical fibre and the second opening may be in a range of 80µm - 120µm, preferably the distance may be 100µm. However, the distance between the end of the second optical fibre and the second opening may be limited by the numerical aperture of the light emitted from the sensor element. A distance being a bit larger than the inner diameter of the sensor element may be preferred. For example, the distance between the end of the second optical fibre and the second opening may be in the range of around 100µm-500 µm if the sensor element has an inner diameter between 50 µm and 300 µm. Consequently, the channel which is formed by the second optical fibre and the connector is extended by the distance between the second opening and the end of the second optical fibre. Therefore, the sensor cavity and the shell cavity are in fluid communication via the channel.

Preferably, the sensor cavity may contain a reagent, and the reagent may be a fluid and/or solid comprising caesium or being caesium based. However, the subject-matter is not limited to caesium based reagents. For example, the reagent may also be a fluid and/or solid comprising rubidium or any other reagent comprising Rydberg atoms. The reagent is sensitive to electromagnetic fields and spectroscopy of such reagents/Rydberg atoms are known in the art and thus, are not further described in the present application.

As described above, the radiation sensor comprises a first-optical fibre and a second optical fibre. The first optical fibre may be a single-mode optical fibre and/or a multi-mode optical fibre. Similar, the second optical-fibre may be a single mode optical fibre and/or multi-mode optical fibre. Preferably, the first-optical fibre may be a single-mode optical fibre and the second optical fibre is a multi-mode optical fibre. In particular, the first optical fibre may be provided as a single-mode fibre and may inject light into the sensor cavity, the injected light is transmitted in the sensor cavity towards the second optical fibre which may be provided as a multi-mode optical fibre where it is injected in the second optical fibre. However, the first optical fibre and second optical fibre may be interchanged. Thus, so that light is injected at the second opening of the sensor element and transmitted towards the first opening.

According to a further aspect, a method for manufacturing a radiation sensor is provided. The method comprises the steps of:
- providing a sensor element, the sensor element having a sensor cavity and a first and second opening;
- closing the first opening by attaching a first optical fibre to the sensor element;
- attaching a connector to the sensor element in association with the second opening; and
- attaching a second optical fibre to the connector and maintaining a channel between the second optical fibre and the connector so that the sensor cavity is in fluid communication with the outer periphery of the sensor element.

The structural features of the radiation sensor may correspond to the radiation sensor apparatus as described above. After the sensor element has been provided, the first optical fibre may be attached to the sensor element. In particular, the first optical fibre is attached to the side of the sensor element containing the first opening.

Preferably, the surface at the end of the first optical fibre which faces the sensor element may be spliced to the wall of the sensor element facing the first optical fibre. The first optical fibre may be spliced selectively to the sensor element, i.e. only at certain points along the perimeter of the cross-section of the first optical fibre, or the first optical fibre may be spliced to the sensor element along the complete perimeter of the cross-section of the first optical fibre. In the latter case, the first opening is completely sealed by the first optical fibre. However, the first optical fibre may also be adhered to the sensor element.

However, the first optical fibre may also be attached to the sensor element by providing the above described coupling element between the sensor element and the first optical fibre. The first optical fibre and the sensor element may be arranged inside the first and second holding portion, respectively. Afterwards, the first optical fibre and the sensor element may be attached to the coupling element. Attaching may be achieved for example by splicing or adhering the first optical fibre and the sensor element to the respective holding portions, or the first optical fibre and the sensor element may be attached to the respective holding portions by using a press-fit technique. Furthermore, also a combination of the described attaching techniques is possible.

Furthermore, the above described connector may be attached to the sensor element in association with the second opening. In particular, the connector may be attached to the side of the sensor element at which the second opening is arranged, wherein the connector may be attached by splicing or adhering the connector to the sensor element.

Furthermore, the above described second optical fibre may be attached to the connector in order to maintain a channel between the second optical fibre and the connector so that the sensor cavity is in fluid communication with the outer periphery of the sensor element. For example, the second optical fibre may be spliced or adhered to the connector.

Preferably, the above described shell may be provided and the shell may be associated to the sensor element so that the sensor cavity is sealed from the outer periphery of the shell and that the sensor cavity and the shell cavity are in fluid communication via the channel.

As described above, the shell comprises the first and second connection portions. In a next step, the above described segment of the second optical fibre is encased by said second connection portion of the shell. This may be achieved by collapsing the shell to the segment of the second optical fibre.

In a similar manner, the segment of the first optical fibre; or the segment of the sensor element; or the segment of the connector is encased by the first connection portion of the shell. This may also be achieved by collapsing the shell to the respective segments of the first optical fibre, or the sensor element, or the connector.
However, it may also be possible to use vacuum feed throughs, for example based on Teflon sealing or FC-like commercial connectors for vacuum fiber ports, for guiding the first optical fibre and/or second optical fibre through the shell. In other words, the first and second connection portions may be provided as vacuum feed throughs.

Preferably, the above described end of the second optical fibre is arranged in the inner of the connector. As described above, the connector may have a tubular or cylindrical shape. That is, the end of the second optical fibre is arranged inside the tube formed by the connector. Due to gravity, the second optical fibre lies within the connector so that second optical fibre touches the inner wall of the connector in a limited area. For example, the second optical fibre only touches the lower part of the inner wall of the connector.

Furthermore, a distance may be maintained between the second opening of the sensor cavity and the end of the second optical fibre. By moving the second optical fibre along a longitudinal direction of the second optical fibre, the distance between the end of the second optical fibre and the second opening may be increased or decreased. Once the end of the second optical fibre has been arranged in a desired distance to the second opening, the second optical fibre is attached to the connector, i.e. to the limited area of the connector.

For this purpose, the second optical fibre may be spliced or adhered to the limited area with which the second optical fibre is in contact. For example without limiting the subject-matter, the second optical fibre is spliced in a distance of 0,5mm - 5mm away from the end of the second optical fibre which faces the second opening of the sensor element. In order to achieve this, sufficient energy is provided by a laser used for the splicing step in order to melt the connector and to establish a connection between the connector and the second optical fibre. However, the energy of the laser is limited so that the connector does not collapse on the second optical fibre since this would close the maintained channel.

As an alternative, splicing may also be performed by a conventional splicing machine instead of a laser.

Additionally, the shell cavity and sensor cavity may be evacuated. For this purpose without limiting the subject-matter, the above described port may be used by applying evacuation techniques well known in the art. The evacuating step provides a vacuum within the shell cavity and the sensor cavity. However, the evacuation of the shell cavity and sensor cavity may be performed completely or partially.

Furthermore, the shell cavity may be filled with the reagent. However, the shell cavity may be filled with the reagent without evacuating the shell cavity beforehand. For this purpose without limiting the subject-matter, the reagent may be filled into the shell cavity by using the above described port.

As an alternative, the above described shell may be omitted. In this case, the sensor cavity may be evacuated inside a vacuum chamber followed by filling a reagent into the sensor cavity. Afterwards the channel may be sealed for example by collapsing the connector to the second optical fibre or by closing the channel with sealing means, for example glue. However, it is also possible to omit the step of evacuating the sensor cavity.

The above and other objects, features and advantages of the present invention will become more apparent upon reading of the following detailed description of preferred embodiments and accompanying drawings. Other features and advantages of the subject-matter described herein will be apparent from the description, the drawings and from the claims. It should be understood that even though embodiments are separately described, single features thereof may be combined to additional embodiments.

### BRIEF DESCRIPTION OF THE DRAWINGS

- Fig. 1: shows an exemplary radiation sensor;
- Fig. 2a: shows an exemplary radiation sensor comprising a shell encasing the first optical fibre;
- Fig. 2b: shows an exemplary radiation sensor comprising a shell encasing the first optical fibre; and
- Fig. 2c: shows an exemplary radiation sensor comprising a shell encasing the first optical fibre.

### DETAILED DESCRIPTION OF THE DRAWINGS

The figures are schematic representations, which are not up to scale and which may comprise parts that are enlarged or downsized for a better understanding. Further some parts may be omitted for better understanding.

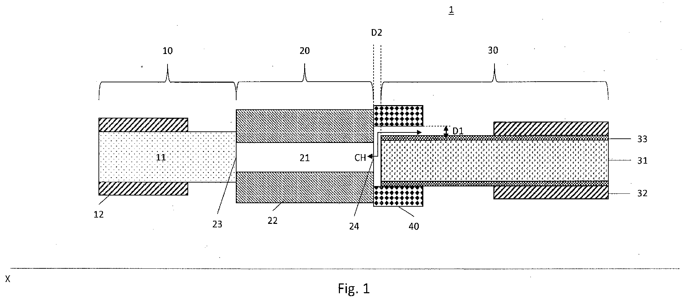

**Fig. 1** shows schematically the structure of a radiation sensor 1 according to the disclosure. The radiation sensor 1 comprises a first optical fibre 10, a sensor element 20, a second optical fibre 30 and a connector 40.

The sensor element has a tubular shape and comprises a wall 22 having a tubular shape extending along a longitudinal direction X. For example without limiting the subject-matter, the wall 22 may have a thickness of 68µm.

The sensor element 20 further comprises two openings, i.e. a first opening 23 and a second opening 24. The first opening 23 and the second opening 24 confine the wall 20 in the longitudinal direction X. In other words, the wall 22 extends from the first opening 23 to the second opening 24 along the longitudinal direction X. In the present example without limiting the invention, the first opening 23 and the second opening may have a diameter in the range of 50µm - 300µm. Furthermore, the space surrounded by the wall 22, the first opening 23 and the second opening 24 define a sensor cavity 21 of the sensor element 20, wherein an outer surface of the wall 22 defines the outer periphery of the sensor element 20. In other words, the area surrounding the outer surface of the wall 22 defines the outer periphery.

Now, the first optical fibre 10 is described. The first optical fibre 10 may be a single-mode optical fibre or a multi-mode optical fibre. In the provided example the first optical fibre 10 is a single-mode optical fibre. The first optical fibre 10 comprises a core 11 extending along the longitudinal direction X. Furthermore, the core is covered by a coating 12. In the present example without limiting the subject-matter, the core 11 may have a diameter in the range of 3µm-10µm. The core 11 of the optical fibre may be further surrounded by a cladding which has been omitted in Fig. 1-2c. The cladding may expand the cross section of the core 11 so that the resulting cross section of the first optical fibre 10 may be sufficient for splicing the first optical fibre 10 to the sensor element 20.

Since the diameter of the core 11of the first optical fibre 10, including the cladding, is larger than the diameter of the first opening 23, an end of the optical fibre 10 closes the first opening 23 of the sensor element. For this purpose, the end of the optical fibre 10 may be attached to the sensor element 20. In particular the surface at the end of the first optical fibre 10 perpendicular to the longitudinal direction X is attached to the wall 22 surrounding the first opening 23. However, the first optical fibre 11 may also be held by a coupling element (not shown) arranged between the first optical fibre 10 and the sensor element 20 so that the first optical fibre 10 closes the first opening 23 of the sensor element 20.

Now, the second optical fibre 30 is described. Similar to the first optical fibre 10, the second optical fibre 30 comprises a core 31. In the present example without limiting the subject-matter, the core 31 may have a diameter in the range of 100µm - 110µm, preferably the core 31 may have a diameter of approximately 105 µm. The core 31 may also have a diameter about the size of the diameter of the second opening 24 or the core 31 of the second optical fibre 30 may also have a diameter in the range of 3µm - 10µm. Furthermore, the core 31 is enclosed by a cladding 33, wherein the cladding 33 may have an outer diameter in the range of 120µm - 130µm, preferably the cladding may have an outer diameter of approximately 125 µm. The cladding 33 is further enclosed by a coating 32.

Now, the connector 40 is described. The connector 40 has a tubular or cylindrical shape and extends along the longitudinal direction X. Thus, the connector has a tubular wall extending from one opening to another opening of the connector. Furthermore, the inner diameter of the connector 40 is larger as the outer diameter of the second optical fibre 30. Thus, the inner diameter of the connector 40 is also larger as the diameter of the second opening 24.

The connector 40 connects the sensor element 20 and the second optical fibre 30. For this purpose, one end of the connector 40 is attached to the sensor element 20. In particular, a side of the connector 40 having an opening is attached to the side of the sensor element 20 having the second opening 24 so that the opening 24 and the opening of the connector 40 face each other. In the present example, the wall of the connector 40 is attached to the wall 22 of the sensor element.

To connect the sensor element 20 and the second optical fibre 30, the second optical fibre 30 is attached to the connector 40. In particular, an end of the second optical fibre 30 is attached along an inner surface of the connector 40. Thus, at the side opposite to the side where the end of the second optical fibre 30 is attached to the connector 40, the connector 40 is spaced apart from the second optical fibre by the distance D1. In the present case, the part of the second optical fibre 30 arranged inside the connector 40 is provided without the coating 32. Furthermore, the end of the second optical fibre 30 is spaced apart from the second opening by the distance D2, in the present example approximately 100µm. Hence, a channel CH fluidly connects the sensor cavity 21 and the outer periphery of the sensor element 20. The channel CH results from the difference of the outer diameter of the second optical fibre 30 arranged inside the connector 40 and the inner diameter 40 of the connector.

In a preferred embodiment, the core 31 of the second optical fibre 30 may have a diameter which is substantially equal to the diameter of the second opening 24 plus a decentering distance. The decentering distance may be substantially equal to half the difference between the inner diameter of the connector 40 and the outer diameter of the second optical fibre 30. As an example, the decentering distance may be between 80µm and 120µm. Preferably, the decentering distance may be 100µm It is preferable to provide the cladding 33 as thin as possible in order to increase the cross section of the channel CH.

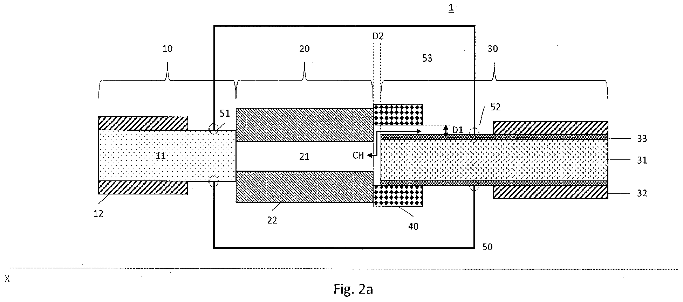

**Fig. 2a** shows schematically the structure of the radiation sensor 1 according to one embodiment of the disclosure. Fig. 2a further depicts a shell 50 arranged around the sensor element 21. The shell 50 comprises a first connection portion 51 and a second connection portion 52. The first connection portion 51 encases a segment of the first optical fibre 10 and the second connection portion 52 encases a segment of the second optical fibre 30. In other words, the first connection portion 51 encases the perimeter of the first optical fibre 10 perpendicular to the longitudinal direction X and the second connection portion 52 encases the perimeter of the second optical fibre 30 perpendicular to the longitudinal direction X. Although Fig. 2a shows that the first connection portion 51 encases the first optical fibre 10 without the coating 12, the first connection portion 51 may also encase the first optical fibre 10 having the coating 12 around the core 11. Similar, the second connection portion 52 may encase either directly the core 31, or the cladding 33, or the coating 32 of the second optical fibre 30.

Furthermore, the space surrounded by the shell 50 defines a shell cavity 53, and the shell cavity 53 and the sensor cavity 21 are in fluid communication via the channel CH. Thus, a reagent provided in the shell cavity 53 may diffuse to the sensor cavity 21.

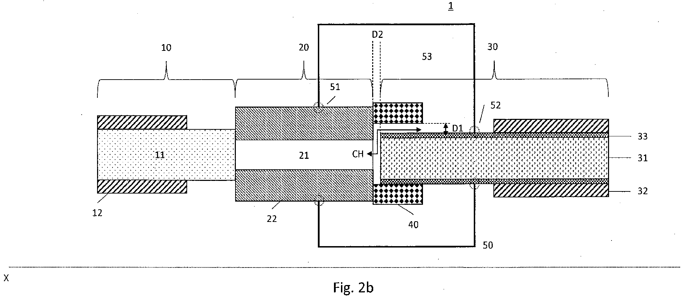

**Fig. 2b** shows schematically the structure of the radiation sensor 1 according to a further embodiment of the disclosure. The embodiment depicted in Fig. 2b differs from the embodiment of Fig. 2a in that the first connection portion 51 encases a segment of the sensor element 20. In particular, the first connection portion 51 encases a perimeter of the sensor element 20 perpendicular to the longitudinal direction X. Also in the depicted embodiment of Fig. 2b, the shell cavity 53 and the sensor cavity 21 are in fluid communication via the channel CH.

Although Fig. 2b shows that the second connection portion 52 encases the cladding 33 of the second optical fibre 30, the second connection portion 52 may encase either directly the core 31, or the cladding 33, or the coating 32 of the second optical fibre 30.

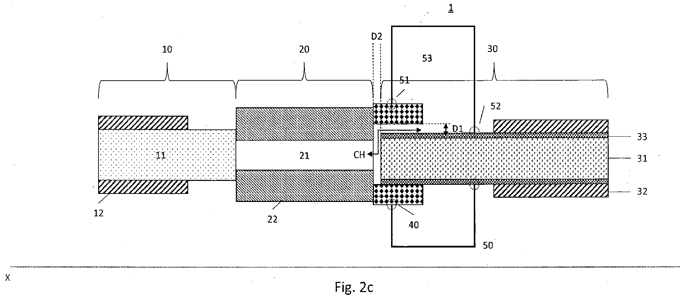

**Fig. 2c** shows schematically the structure of the radiation sensor 1 according to a further embodiment of the disclosure. The embodiment depicted in Fig. 2c differs from the embodiment of Fig. 2a and 2b in that the first connection portion 51 encases a segment of the connector 40. In particular, the first connection portion 51 encases a perimeter of the connector 40 perpendicular to the longitudinal direction X. Also in the embodiment of Fig. 2c the shell cavity 53 and the sensor cavity 21 are in fluid communication via the channel CH. However, in the embodiment depicted in Fig. 2c the sensor element 20 is not surrounded by the shell 50 or the shell cavity 53. Hence, the sensor element 20 can be arranged very close to the location at which the electromagnetic field is measured. Thus, the accuracy of the measured data is increased and the size of the radiation sensor can be further reduced.

Although Fig. 2c shows that the second connection portion 52 encases the cladding 33 of the second optical fibre 30, the second connection portion 52 may encase either directly the core 31, or the cladding 33, or the coating 32 of the second optical fibre 30.

### Reference signs list

- 10: first optical fibre
- 11: core
- 12: coating
- 20: sensor element
- 21: sensor cavity
- 22: sensor wall
- 23: first opening
- 24: second opening
- 30: second optical fibre
- 31: core
- 32: coating
- 33: cladding
- 40: connector
- 50: shell
- 51: first connection portion
- 52: second connection portion
- 53: shell cavity
- CH: channel
- D1: distance connector - second optical fibre
- D2: distance second opening - second optical fibre
- X: longitudinal direction of the radiation sensor / sensor element

## Claims

1. A radiation sensor (1) comprising:
- a sensor element (20) having a sensor cavity (21) and a first (23) and second opening (24);
- a first optical fibre (10) configured to close the first opening (23);
- a connector (40) attached to the sensor element (20) and associated to the second opening (24); and
- a second optical fibre (30) attached to the connector (40), wherein the connector (40) and the second optical fibre (30) are configured to form a channel (CH) so that the sensor cavity (21) is in fluid communication with the outer periphery of the sensor element (20).

2. The radiation sensor (1) according to claim 1, further comprising a shell (50) which is associated to the sensor element (20), wherein the shell (50) comprises a shell cavity (53) and the shell (50) is configured to seal the sensor cavity (21) from the outer periphery of the shell (50), and
wherein the sensor cavity (21) and the shell cavity (53) are in fluid communication via the channel (CH).

3. The radiation sensor (1) according to claim 2, wherein the shell (50) further comprises a first connection portion (51) and a second connection portion (52) and wherein the second connection portion (52) encases a segment of the second optical fibre (30); and:
- wherein the first connection portion (51) encases a segment of the first optical fibre (10); or
- wherein the first connection portion (51) encases a segment of the sensor element (20); or
- wherein the first connection portion (51) encases a segment of the connector (40).

4. The radiation sensor (1) according to any one of the preceding claims,
wherein the connector (40) has a tubular shape and an end of the second optical fibre (30) is arranged inside the connector (40); and wherein optionally
the end of the second optical fibre (30) is spaced apart from the second opening (24) of the sensor element (20).

5. The radiation sensor (1) according to any one of the preceding claims,
wherein the connector (40) has an inner diameter which is larger than the outer diameter of the second optical fibre (30); and/or
wherein the outer diameter of the second optical fibre (30) is greater than or equal to the diameter of the second opening (24).

6. The radiation sensor (1) according to any one of the preceding claims,
wherein the sensor cavity (22) contains a reagent, and the reagent may be a fluid and/or solid comprising caesium.

7. The radiation sensor (1) according to any one of the preceding claims,
wherein the first optical fibre (10) is a single-mode optical fibre or a multi-mode optical fibre; and/or
wherein the second optical fibre (30) is a single-mode optical fibre and/or a multi-mode optical fibre.

8. A method for manufacturing a radiation sensor, the method comprising:
- providing a sensor element, the sensor element having a sensor cavity and a first and second opening;
- closing the first opening by attaching a first optical fibre to the sensor element;
- attaching a connector to the sensor element in association with the second opening; and
- attaching a second optical fibre to the connector and maintaining a channel between the second optical fibre and the connector so that the sensor cavity is in fluid communication with the outer periphery of the sensor element.

9. The method according to claim 8, further comprising:
- providing a shell, the shell comprising a shell cavity;
- associating the shell to the sensor element so that the sensor cavity is sealed from the outer periphery of the shell and wherein the sensor cavity and the shell cavity are in fluid communication via the channel.

10. The method according to claim 9, wherein the step of associating the shell to the sensor element comprises encase a segment of the second optical fibre with a second connection portion of the shell, and:
a) encase a segment of the first optical fibre with a first connection portion of the shell; or
b) encase a section of the sensor element with a first connection portion of the shell; or
c) encase a section of the connector with a first connection portion of the shell.

11. The method according to any one of claims 8-10, further comprising providing the connector, wherein the connector is a tubular shaped connector with an inner diameter being larger than the outer diameter of the second optical fibre, and then attaching the second optical fibre to the connector by:
- arranging an end of the second optical fibre in the inner of the connector;
- maintaining a distance between the second opening of the sensor cavity and the end of the second optical fibre; and
- attaching the second optical fibre to the connector.

12. The method according to any one of claims 9-11, further comprising:
- evacuating the shell cavity; and/or
- filling the shell cavity with a reagent, wherein the reagent may be provided as a fluid and/or solid comprising caesium.

13. The method of claim 8, further comprising:
- evacuating the sensor cavity;
- filling the sensor cavity with a reagent; and
- sealing the channel.
